# EUROPÄISCHE PATENTSCHRIFT

(11) **EP 1 271 310 B1**
(45) Veröffentlichungstag und Bekanntmachung des Hinweises auf die Patenterteilung: **05.02.2003**
(21) Anmeldenummer: 01115383.0
(22) Anmeldetag: 26.06.2001
(51) Int. Cl.: G06F 9/445, G06F 1/00

(54) **Verfahren zum Erweitern einer mittels eines Installationsprogramms zu installierenden Anwendung um eine Funktion und Computerprogrammprodukt**
Method to extend application that is to be installed with an installation program with a function and a computer program product
Méthode d'étendre une application à installer avec un logiciel d'installation avec une fonction et un produit de logiciel d'ordinateur

(43) Veröffentlichungstag der Anmeldung: 02.01.2003
(73) Patentinhaber: Aladdin Knowledge Systems GmbH& Co. KG, 82110 Germering (DE)
(72) Erfinder: Zunke, Michael, 85609 Aschheim (DE)
(74) Vertreter: Grimm, Christian Jan Rainer

(56) Entgegenhaltungen:
- US-A- 5 956 408
- US-B1- 6 243 692

## Beschreibung

Die Erfindung bezieht sich auf ein Verfahren zum Erweitem einer mittels eines Installationsprogrammes zu installierenden Anwendung um eine Funktion sowie auf ein Computerprogrammprodukt.

Mit zunehmender Verbreitung von Computer-Netzwerken (wie z. B. das Internet) wird auch der elektronische Vertrieb von Software über solche Netzwerke immer interessanter, wobei dieser Vertrieb häufig von Software-Distributoren durchgeführt wird, die die zu vertreibende Software von Software-Herstellern beziehen. Aufgrund der Komplexität heutiger Programme liegt diese Software in der Regel als Softwarepaket vor, das ein Installationsprogramm und ein Programmarchiv, in dem die mittels des Installationsprogrammes zu installierenden Komponenten der gewünschten Anwendung abgelegt sind, umfaßt. Dies wird deshalb gemacht, da die zu installierenden Komponenten häufig in unterschiedlichen Verzeichnissen auf dem Zielsystem abgelegt oder sogar beim Betriebssystem des Zielsystems registriert werden müssen. Des weiteren ermöglicht das Installationsprogramm häufig auch die De-Installation der Anwendung.

Die zu installierenden Komponenten, die in der Installationsprogramm-Datei und/oder in zusätzlichen Dateien abgelegt sind, sind In der Regel komprimiert und häufig zumindest teilweise verschlüsselt, wobei das Dateiformat dieser Komponenten oft proprietär ist und nur vorn Installationsprogramm selbst verstanden wird. Soll nun eine solche installationsbereite Anwendung nachträglich für den Vertrieb über ein Netzwerk erweitert werden, so ist es wichtig, daß die installationsbereite Anwendung mit einer zusätzlichen Funktion, wie z.B. eine Schutzfunktion gegen die unberechtigte Nutzung, versehen werden kann. Da jedoch der Software-Distributor in der Regel nicht das Dateiformat der im Programmarchiv abgelegten, zu installierenden Komponenten kennt, kann er somit die zu installierenden einzelnen Komponenten nicht einfach verändern oder austauschen.

Eine Möglichkeit besteht nun darin, daß der Software-Distributor die installationsbereite Anwendung installiert und eine der installierten Komponenten mit der von ihm gewünschten Schutzfunktion versieht. Da der Software-Distributor in der Regel jedoch nicht alle nötigen Informationen zur Erstellung der installationsbereiten Software besitzt und somit das Programmarchiv, das die geschützte Komponente umfaßt, selbst nicht erzeugen kann, gibt er die geschützte Komponente dem Software-Hersteller, der dann aus der geschützten Komponente und den restlichen Komponenten wiederum eine installationsbereite Anwendung erstellt, die nun die geschützte Komponente umfaßt Dieses Vorgehen ist jedoch sehr zeitaufwendig und führt nachteilig noch zu höheren Kosten.

Aus WO 99/52031 A1 ist ein Verfahren bekannt, um eine installationsbereite Anwendung, die elektronisch vertrieben werden soll, mit einer sogenannten Ausprobieren/Kaufen-Fähigkeit (Try/Buy-Fähigkeit) zu versehen, die einem Kunden die Möglichkeit gibt, die installationsbereite Anwendung auf seinem Rechner zu installieren und für eine vorbestimmte Zeitdauer auszuprobieren. Nach Ablauf dieser Zeitdauer kann die Anwendung nur noch dann weiter verwendet werden, wenn sie nach Entrichten des Kaufpreises freigeschaltet wird.

Um nun eine installationsbereite Anwendung mit der Ausprobieren/Kaufen-Fähigkeit zu versehen, wird zunächst ermittelt, nach welchen Regeln die installationsbereite Anwendung aus den ursprünglichen Komponenten generiert wurde. Ausgehend davon wird dann das Programmarchiv entpackt und eine gewünschte Komponente wird mit der Ausprobieren/Kaufen-Eigenschaft versehen. Dann wird ein neues Programmarchiv erstellt, das anstatt der ausgewählten Komponente die geänderte Komponente mit der Ausprobieren/Kaufen-Eigenschaft enthält, wobei dieses neue Archiv gemäß den zuvor festgesteliten Regeln neu gepackt wird, so daß die Installation mittels der Installationsprogramms gewährleistet werden kann. Somit wird die gewünschte Komponente aus dem ursprünglichen Programmarchiv entfernt und durch die veränderte Komponente ersetzt. Ferner muß bei diesem Verfahren die Art und Weise der Erzeugung des Programmarchivs bekannt sein oder ermittelt werden können, um das modifizierte Programmarchiv erzeugen zu können.

Ausgehend hiervon ist es Aufgabe der vorliegenden Erfindung, ein Verfahren zum Erweitern einer mittels eines Installationsprogrammes zu installierenden Anwendung um eine Funktion bereitzustellen, das ohne Kenntnis der Regeln zum Erzeugen des Programmarchivs durchführbar ist. Des weiteren soll noch ein Computerprogrammprodukt bereitgestellt werden, mit dem die Schritte des erfindungsgemäßen Verfahrens verwirklicht werden können.

Die Aufgabe wird durch das erfindungsgemaße Verfahren zum Erweitern einer mittels eines Installationsprogrammes zu installierenden Anwendung um eine Funktion, wobei die zu installierende Anwendung eine mittels des Installationsprogrammes zu installierende Komponente aufweist, die in einem Programmarchiv abgelegt ist, und das Installationsprogramm mit dem Programmarchiv ein Softwarepaket bildet, dadurch gelöst, daß das Verfahren folgende Schritte umfaßt
Hinzufügen einer um die Funktion erweiterten Version der zu installierenden Komponente und von Hilfscode zum Softwarepaket, wobei dabei die Komponente weder zum Teil noch vollständig aus dem Programmarchiv entfernt wird, und Ändern des Installationsprogrammes derart, daß aufgrund seiner Ausführung der Hilfscode gestartet wird, der bewirkt, daß statt der Komponente die erweiterte bzw. die geänderte Komponente installiert wird.

Bei diesem Verfahren ist es somit nicht notwendig, das Programmarchiv in der Weise zu ändern, daß die Komponente (die ausführbaren Softwarecode und/oder Daten enthalten kann) aus dem Programmarchiv entfernt ist, so daß ein Erweitern der installationsbereiten Anwendung um die Funktion leicht möglich ist. Da weiter die geänderte Komponente und der Hilfscode außerhalb des Programmarchivs zum Softwarepaket hinzugefügt werden, ist insbesondere auch kein Neupacken des Programmarchivs erforderlich. Mit dem erfindungsgemäßen Verfahren kann daher in vorteilhafter Weise ein Softwarepaket, das eine mittels eines Installationsprogrammes zu installierende Anwendung enthält, nachträglich mit einer Funktion versehen werden, ohne daß die Dateistruktur des Programmarchivs bekannt sein muß. Dadurch kann ein schnell und einfach durchzuführendes Verfahren bereitgestellt werden, mit dem gezielt eine Komponente eines Programmarchivs aus einem Softwarepaket verändert werden kann.

In vorteilhafter Weise können mit dem erfindungsgemäßen Verfahren auch mehrere zusätzliche Funktionen zur zu installierenden Anwendung hinzugefügt werden, so daß eine umfassende nachträgliche Änderung der zu installierenden Anwendung möglich ist, ohne den Quellcode der Anwendung kennen und die Komponente aus dem Programmarchiv entfernen zu müssen.

Insbesondere kann man mit dem erfindungsgemäßen Verfahren auch mehrere Anwendungen, die in einem Softwarepaket enthalten sind, jeweils um eine Funktion erweitern. Dabei kann man denselben Hilfscode für alle zu schützenden Anwendungen einsetzen, wobei natürlich für jede zu schützende Anwendung eine geschützte Komponente hinzugefügt wird.

Des weiteren kann man mit dem erfindungsgemäßen Verfahren, wenn die zu installierende Anwendung mehrere zu installierende Komponenten umfaßt, die im Programmarchiv abgelegt sind, auch mehrere veränderte Komponenten der zu installierenden Anwendung erzeugen und zum Softwarepaket hinzufügen, so daß sich die Funktion z. B. verbessern und verfeinem läßt oder so daß die zu installierende Anwendung mehrere zusätzliche Funktionen aufweisen kann. Mit dem erfindungsgemäßen Verfahren ist somit das nachträgliche Erweitem der installationsbereiten Anwendung möglich, ohne daß deren Quellcode bekannt sein muß. Auch kann durch das nachträgliche Erweitem um die Funktion diese Funktion immer In der modemsten Art und Weise verwirklicht werden.

Die erweiterte Komponente kann die gleiche Anzahl von Dateien wie die (ursprüngliche) Komponente (z.B. eine einzige Datei) umfassen. Es ist jedoch auch möglich, daß die erweiterte Komponente mehr oder weniger Dateien als die (ursprüngliche) Komponente aufweist. In der Regel wird die erweiterte Komponente jedoch mehr Softwarecode umfassen als die ursprüngliche Komponente, um die gewünschte Funktion zu verwirklichen.

Bei der gewünschten Funktion kann es sich um die AusprobierenlKaufen-Fähigkeit oder auch um ein Schützen der mittels des Installationsprogramms zu installierenden Anwendung gegen unberechtigte Nutzung handeln. Im diesem Fall ist es vorteilhaft, daß die Art Ausprobieren/Kaufen-Fähigkeit bzw. des Schutzes frei ausgewählt werden können und daß dadurch insbesondere die installationsbereite Anwendung immer mit der modernsten Ausprobieren/Kaufen-Fähigkeit bzw. dem modernsten Schutzmechanismus versehen werden kann.

Femer kann es sich bei der Funktion um eine Datenverschlüsselung handeln, die die Daten, die die Installierte Anwendung (z.B. im Zielsystem (Computer mit Prozessor, Arbeitsspeicher, Ausgabe- und Eingabeeinheit und gegebenenfalls mit einem Betriebssystem)) ablegt, vor dem Ablegen immer verschlüsselt, und die die Daten, die die installierte Anwendung wieder liest, wiederum entschlüsselt. Dadurch wird vorteilhaft sichergestellt, daß die Daten nur für die installierte Anwendung lesbar sind.

Es ist auch möglich, daß es sich bei der gewünschten Funktion um eine sogenannte Splash-Anzeige handelt, die auf dem Bildschirm des Zielsystems unmittelbar nach Aufruf der installierten Anwendung gezeigt wird und zumindest so lange auf dem Bildschirm stehen bleibt, bis die installierte Anwendung geladen und ausführbar ist, wobei die Splash-Anzeige natürlich auch länger dargestellt werden kann. Mit dieser Splash-Anzeige können Informationen bezüglich der Anwendung, Werbung für z.B. Software-Produkte oder sonstige Daten dargesteilt werden.

Das Installationsprogramm kann in einer oder mehreren Dateien abgelegt sein, und die zu installierende Komponente bzw. die zu installierenden Komponenten können komprimiert und/oder zumindest teilweise verschlüsselt sein und in der bzw. den Installationsprogrammdatei(en) und/oder in zusätzlichen Dateien abgelegt sein. Die notwendigen Informationen für das Installationsprogramm zur Installation (z.B. zum Entpacken des Programmarchivs) sind in der bzw. den Installationsprogrammdatei(en) und z.B. zum Teil auch im Programmarchiv abgelegt. Der Hilfscode (der zumindest ausführbaren Softwarecode und gegebenenfalls auch Daten enthalten kann) kann in der bzw. den Installationsprogrammdatei(en) vollständig oder zum Teil abgelegt sein, kann aber auch in einer oder mehreren separaten Dateien vorliegen.

Die Reihenfolge der Schnitte des erfindungsgemäßen Verfahrens ist frei wählbar, wobei es auch möglich ist, Schritte zusammenzufassen und somit gleichzeitig auszuführen.

Bevorzugt wird bei dem erfindungsgemäßen Verfahren Hilfscode zum Softwarepaket hinzugefügt, der bei seiner Ausführung bewirkt, daß bei Auftreten eines durch die Ausführung des Installationsprogrammes bedingten Ereignisses die erweiterte Komponente statt der Komponente installiert wird. Dadurch kann man einen ereignisbedingten Zeitpunkt auswählen, zu dem die erweiterte Komponente mittels des Hilfscodes installiert wird, so daß sichergestellt ist, daß nach Beendigung des Installationsvorganges des Installationsprogrammes und des Hilfscodes die um die Funktion erweiterte Anwendung installiert ist.

In einer weiteren vorteilhaften Weiterbildung des erfindungsgemäßen Verfahrens wird Hilfscode hinzugefügt, der bei seiner Ausführung bewirkt, daß die bereits installierbe Komponente durch die erweiterte Komponente ersetzt wird. Die installierte Komponente wird dabei bevorzugt gelöscht, kann aber auch umbenannt werden, wobei dies natürlich nicht so sicher wie das Löschen der installierten Komponente ist. Bei diesem Verfahren muß in den Installationsvorgang des Installationsprogrammes nur geringfügig eingegriffen werden, es muß lediglich sicher gestellt werden, daß nach der Installation der Komponente mittels des Installationsprogrammes noch der Hilfscode ausgeführt wird (z.B. durch Verzweigung aus dem Installationsprogramm in den Hilfscode), der dann das Ersetzen der installierten Komponente durch die erweiterte Komponente bewirkt.

Bevorzugt wird die Ersetzung der installierten Komponente durch die erweiterte Komponente durch den Hilfscode nach Abschluß der Installation der im Programmarchiv enthaltenen Komponenten bewirkt, da dies technisch einfach zum Beispiel dadurch realisiert werden kann, daß die bei Abschluß durch das Installationsprogramm aufzurufende Betriebssystemfunktion überwacht wird oder daß vor Aufruf dieser Funktion aus dem Installationsprogramm in den Hilfscode verzweigt wird.

Eine vorteilhafte Ausgestaltung des erfindungsgemäßen Verfahrens besteht auch darin, daß Hilfscode hinzugefügt wird, der bei seiner Ausführung bewirkt, daß die Installation der Komponente verhindert und statt dessen die erweiterte Komponente installiert wird. Dieses Verfahren ist in vorteilhafter Weise sehr sicher, da so in keinem Zeitpunkt die (unveränderte bzw. ungeschützte) Komponente installiert Ist und somit auch ein erzwungener Abbruch des Installationsvorgangs nicht dazu führt, daß die Anwendung ohne die gewünschte Funktion, wie z.B. Schutz gegen unberechtigte Nutzung, installiert ist.

Bevorzugt kann bei dem erfindungsgemäßen Verfahren Hilfscode hinzugefügt werden, der bei seiner Ausführung bewirkt, daß der Installationsvorgang überwacht wird und bei Beginn der Installation der Komponente durch das Installationsprogramm derart in diesen Vorgang eingriffen wird, daß die Installation der Komponente verhindert wird. Diese Überwachung des Installationsvorgangs kann durch einen Filter durchgeführt werden, der die Kommunikation zwischen dem Installationsprogramm und dem Zielsystem, auf dem die Anwendung installiert wird, überwacht. Der Filter kann bspw. auf Betriebssystemebene des Zielsystems eingerichtet werden. Alternativ kann auch das Installationsprogramm so geändert werden, daß bei jedem Betriebssystemaufruf zum Erzeugen einer Datei zum Hilfscode verzweigt wird, der dann feststellen kann, ob die Komponente installiert (erzeugt) werden soll und dies dann verhindert.

Insbesondere kann beim erfindungsgemäßen Verfahren das Installationsprogramm derart verändert werden, daß bei seiner Ausführung die Programmroutine zur Installation der Komponente übersprungen wird. Die erweiterte (z.B. geschützte) Komponente kann direkt nach dem Überspringen der Programmroutine oder auch zu einem anderen Zeitpunkt mittels des Hilfscodes installiert werden. Auch dadurch wird somit sicher erreicht, daß nie die ungeschützte Komponente bei der Installation installiert wird.

Bei dem erfindungsgemäßen Verfahren kann vor dem Schritt des Hinzufügens der erweiterten Komponente diese in einem gesonderten Schritt erzeugt werden, so daß bspw. der Software-Distributor allein die zu erweitemde Komponente der zu installierenden Anwendung auswählen und erweitern kann. Bei diesem Schritt der Erzeugung kann die zu erweiternde Komponente automatisch oder manuell ausgewählt werden.

Wenn das Programmarchiv mehrere zu installierende Komponenten enthält, kann bei einer weiteren vorteilhaften Ausgestaltung des erfindungsgemäßen Verfahrens der Schritt der Erzeugung der erweiterten Komponente folgende Schritte umfassen:
Installieren der zu erweiternden Anwendung, Auswählen einer der installierten Komponenten als zu erweiternde Komponente und Erweitern der ausgewählten Komponente.

Die Erweiterung kann z.B. durch Hinzufügen eines Zusatzmoduls, das Code zur Verwirklichung der gewünschten Funktion und gegebenenfalls notwendige Daten enthält, erfolgen, wobei dabei z. B. noch der Startpunkt in der erweiterten Komponente auf das Zusatimodul umgelegt wird. Es kann auch jeder andere dem Fachmann bekannte Technik gewählt werden, die sicherstellt, daß das Zusatzmodul bei Ausführung der Anwendung (bevorzugt der erweiterten Komponente) seinerseits ausgeführt wird. Wenn die zu installierende Anwendung gegen unberechtigte Nutzung geschützt werden soll, kann die ausgewählte Komponente mit einem Schutzmodul ergänzt werden, das die Ausführung der veränderten Komponente nur bei Vorliegen einer Laufberechtigung zuläßt.

Damit wird die Möglichkeit bereitgestellt, daß die Komponente, die geschützt werden soll, frei ausgewählt werden kann, so daß der Software-Distributor die für ihn relevante Komponente schützen kann. Das Auswählen der zu schützenden Komponente kann automatisch oder auch manuell durchgeführt werden. So ist es bspw. möglich, daß die Komponente ausgewählt wird, die zum Start der installierten Anwendung auszuführen ist Damit wird dann auch gewährleistet, daß die Schutzfunktion der installierten Anwendung nicht umgangen werden kann.

Ferner wird durch die angegebene Erzeugung der geschützten Komponente auch ermöglicht, daß die Art des Schutzes frei wählbar ist. Das Schutzmodul, mit dem die Komponente ergänzt wird, überprüft bspw. ob ein vom Software-Distributor generiertes Zertifikat auf dem Zielsystem oder ein bestimmtes Hardwareelement vorhanden ist. Nur wenn dies der Fall ist, liegt die benötigte Laufberechtigung vor und kann die geschützte Komponente und damit die Anwendung ausgeführt werden.

Des weiteren kann beim erfindungsgemäßen Verfahren das Installationsprogramm derart geändert werden, daß eine im Installationsprogramm enthaltene Information, die den Startpunkt des Installationsprogramms angibt, so verändert wird, daß sie nun einen Im Hilfscode liegenden Punkt als Startpunkt vorgibt. Damit wird in einfacher Art und Weise gewährleistet, daß bei Aufruf des Installationsprogrammes immer sofort der Hilfscode gestartet wird, so daß auch sicher gestellt wird, daß die erweiterte Anwendung installiert wird.

In einer vorteilhaften Weiterbildung des erfindungsgemäßen Verfahrens wird das Programmarchiv verschlüsselt, so daß vorteilhaft verhindert werden kann, daß das Programmarchiv, aus dem beim erfindungsgemäßen Verfahren die (unveränderte) Komponente nicht entfernt wird, mit einem anderen Installationsprogramm noch als nicht erweiterte Anwendung installiert werden kann. Bei diesem Verschlüsseln muß vorteilhaft das Dateiformat des Programmarchivs nicht bekannt sein und die Komponente muß auch nicht aus dem Programmarchiv entfernt werden.

Insbesondere kann auch die erweiterte Komponente verschlüsselt werden, so daß eine nicht gewünschte Änderung der erweiterten Komponente, mit der beispielsweise die Änderung der Komponente rückgängig gemacht wird, effektiv verhindert werden kann. Wenn mehrere erweiterte Komponenten zum Softwarepaket hinzugefügt werden, können alle diese Komponenten oder auch nur zumindest eine dieser Komponenten verschlüsselt werden.

Bevorzugt wird dazu das Softwarepaket, insbesondere das Instaltationsprogramm, noch mit einem Entschlüsselungsmodul (das Softwarecode und gegebenenfalls notwendige Daten enthält) ergänzt, das beispielsweise nur bei Vorliegen einer Laufberechtigung, wie z.B. ein auf dem Zielsystem vorhandenes Zertifikat, das vom Software-Distributor erzeugt ist, ein bestimmtes Hardwareelement des Zielsystems, ein einzugebender Freischaltcode oder eine eindeutige Kennung, das verschlüsselte Programmarchiv und gegebenenfalls die verschlüsselte Komponente (n) entschlüsselt, so daß dann die erweiterte Anwendung installiert werden kann.

Das erfindungsgemäße Computerprogrammprodukt umfaßt Softwarecode (und, falls nötig, Daten), mit dem die Schritte des erfindungsgemäßen Verfahrens sowie vorteilhaft auch die der bevorzugten Weiterbildungen des erfindungsgemäßen Verfahrens ausgeführt werden können, wenn das Produkt auf einem Computer läuft. Ein solcher Computer umfaßt neben der erforderlichen Hardware (wie z.B. Prozessor, Arbeitsspeicher, Ausgabeeinheit, Eingabeeinheit) häufig auch noch ein Betriebssystem. Der Softwarecode (und gegebenenfalls die Daten) des erfindungsgemäßen Computerprogrammprodukts ist an den Computer bzw. das Zielsystem so angepaßt, daß bei Ausführung des Computerprogrammprodukts und somit des Softwarecodes die Schritte des erfindungsgemäßen Verfahrens verwirklicht werden können.

In einer vorteilhaften Weiterbildung des erfindungsgemäßen Computerprogrammprodukts ist dieses auf einem Datenträger gespeichert. Als Datenträger kann jedes Medium verwendet werden, von dem das gespeicherte Computerprogrammprodukt wieder ausgelesen werden kann, wie z.B. eine Diskette, eine CD, eine DVD, ein Magnetband oder auch eine Festplatte.

Die Erfindung wird nachfolgend beispielshalber anhand der Zeichnungen noch näher erläutert.
Es zeigen:
- Fig. 1: schematisch den Aufbau eines Softwarepakets mit der zu erweiternden Anwendung;
- Fig. 2: schematisch den Aufbau des Installationsprogrammes, das in dem In Fig.1 gezeigten Softwarepaket enthalten ist;
- Fig. 3: einen Ablaufplan des erfindungsgemäßen Verfahrens zum Erweitern der zu installierenden Anwendung;
- Fig. 4: schematisch den Aufbau des Softwarepakets mit der erweiterten Anwendung, und
- Fig. 5: schematisch den Aufbau des Installationsprogrammes, das in dem in Fig. 4 gezeigten Softwarepaket enthalten ist.

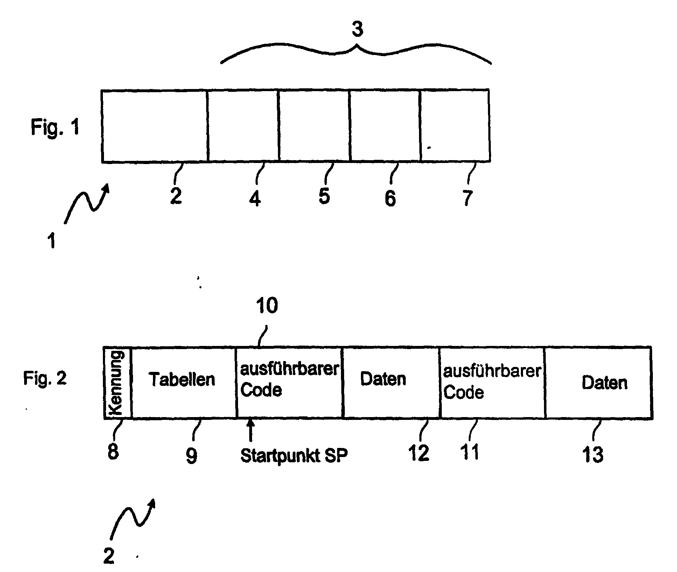

Wie in Fig. 1 gezeigt ist, umfaßt das Softwarepaket 1 ein ausführbares Installationsprogramm 2 und ein Programmarchiv 3, das die mittels des installationsprogrammes 2 zu installierenden Komponenten 4, 5, 6, 7 der Anwendung enthält, wobei die Komponenten 4, 5, 6, 7 in einem dem Installationsprogramm 2 zugänglichen Dateiformat (z.B. in komprimierter Form) abgelegt sind. Informationen zum Entpacken dieser komprimierten Komponenten 4 bis 7 und ihrer Verwendung während der Installation der Anwendung sind im Installationsprogramm 2 enthalten.

Der Aufbau und der exakte Inhalt des Installationsprogrammes, der in Fig. 2 gezeigt ist, hängt zumindest vom Betriebssystem und vom Prozessor des Zielsystems (Betriebssystem und Computer, der Prozessor, Arbeitsspeicher, Eingabeeinheit, Ausgabeeinheit und sonstige Hardwareelemente ausweisen kann) ab, auf dem das Installationsprogramm ausgeführt werden soll.

Der gezeigte Aufbau ist für ein Zielsystem mit einem Pentiumprozessor III (der Firma INTEL Corporation) und einem Windows 98 Betriebssystem der Firma Microsoft Corporation (oder auch Windows 95, Windows ME, Windows 2000 oder Windows NT von Microsoft) angegeben und umfaßt eine Kennung 8, anhand der das Betriebssystem feststellen kann, um welchen Dateityp es sich handelt (z.B. um eine ausführbare Datei: *.exe). Des weiteren sind Tabellen 9 im Installationsprogramm 2 enthalten, in denen die Struktur des Instaltattonsprogramms im Detail beschrieben ist und die das Betriebssystem benötigt, um vor der Ausführung des Installationsprogramm dieses in den Arbeitsspeicher des Zielsystems zu laden, damit der Prozessor das Installationsprogramm dann ausführen kann. Unter anderem ist dazu in diesen Tabellen der Startpunkt SP angegeben, an dem der Prozessor die Ausführung des Programmes beginnen soll. Dieser Startpunkt SP zeigt auf ausführbaren Programm- bzw. Softwarecode, der, wie in Fig. 2 gezeigt, oft in mehreren Abschnitten 10, 11 vorliegt (der ausführbare Programmcode kann auch in nur einem oder in mehr als zwei Abschnitten vorliegen). Schließlich sind noch Abschnitte 12 und 13 vorgesehen, in denen Daten, die vom Installationsprogramm während seiner Laufzeit benutzt werden (wie z. B. die Informationen zum Entpacken der komprimierten Komponenten und ihre Verwendung), abgelegt sind. Die Daten können auch in einem oder in mehreren Abschnitten abgelegt sein. Wenn keine Daten benötigt werden, können diese Abschnitte auch entfallen.

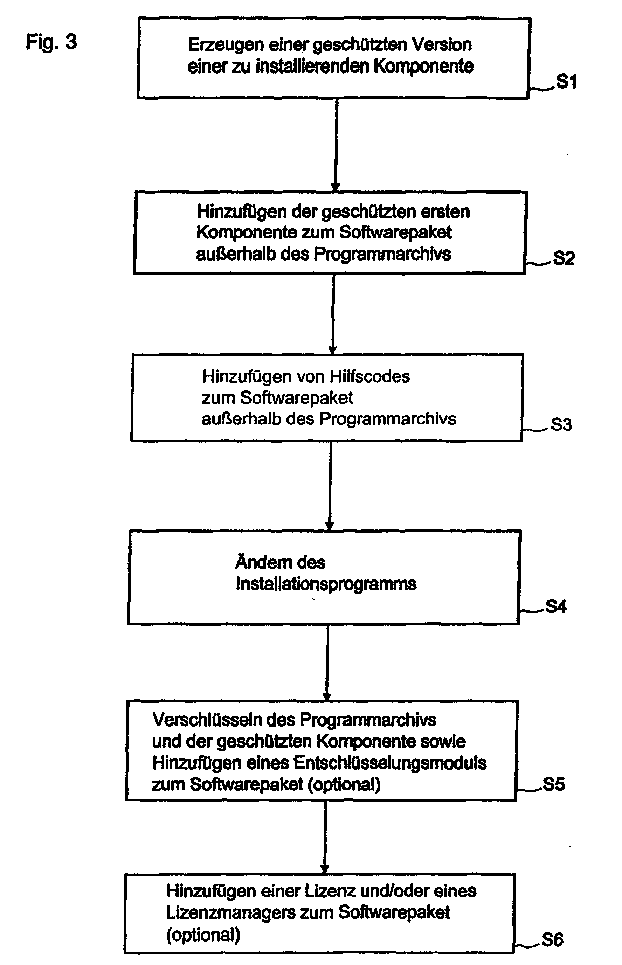

Im folgenden wird im Detail beschrieben, wie die zu installierende Anwendung um die Funktion des Schutzes gegen unberechtigte Nutzung erweitert werden kann. Zum Schätzen der zu Installierenden Anwendung wird, wie in dem in Fig. 3 gezeigten Ablaufplan ersichtlich ist, zuerst eine geschützte Version einer der zu installierenden Komponenten erzeugt (Schritt S1), wenn diese geschützte Version noch nicht vorliegt Dazu wird das in dem in Fig. 1 gezeigten Softwarepaket 1 enthaltene Installationsprogramm 2 ausgeführt, so daß die Anwendung auf einem Zielsystem installiert wird. Von den auf dem Zielsystem installierten Komponenten der Anwendung wird dann eine erste Komponente 4 ausgewählt, die geschützt werden soll. Die ausgewählte Komponente 4, die bevorzugt eine Komponente 4 ist, die zur Ausführung der Anwendung unbedingt erforderlich ist, wie z. B. eine ausführbare Datei, wird dadurch geschützt, daß sie mit einem Schutzmodul 14 versehen wird (das seinerseits ausführbaren Code enthält). Ferner wird noch der in der Komponente 4 enthaltene Zeiger, der den Startpunkt angibt, so verändert, daß er auf das Schutzmodul 14 zeigt, so daß bei Start der geänderten Komponente 4 zuerst der Code des Schutzmoduls 14 ausgeführt wird. Dieser Code des Schutzmoduls 14 überprüft, ob eine Laufberechtigung vorliegt, und gibt die Komponente frei, wenn dies der Fall ist Diese Überprüfung der Laufberechtigung kann bspw. an das Vorhandensein eines Zertifikats, das nur vom Software-Distributor, -Hersteller oder einer autorisierten Stelle erzeugt werden kann, geknüpft sein.

In einem zweiten Schritt S2 wird die geschützte erste Komponente 4' zum Softwarepaket 1 außerhalb des Programmarchivs 3 hinzugefügt, so daß in diesem Schritt das Programmarchiv 3 nicht verändert wird. Insbesondere muß dazu die Struktur bzw. der Aufbau des Programmarchivs auch nicht bekannt sein.

Danach wird Hilfscode 15 (der Softwarecode und, falls nötig, Daten umfaßt) wiederum außerhalb des Programmarchivs 3 zum Softwarepaket 1 hinzugefügt (Schritt S3). Der Hilfscode 15 wird dabei bevorzugt zum Installationsprogramm 2 hinzugefügt und sorgt, wie nachfolgend noch beschrieben wird, bei der Installation der Anwendung dafür, daß statt der ersten Komponente 4 die geschützte erste Komponente 4' installiert wird.

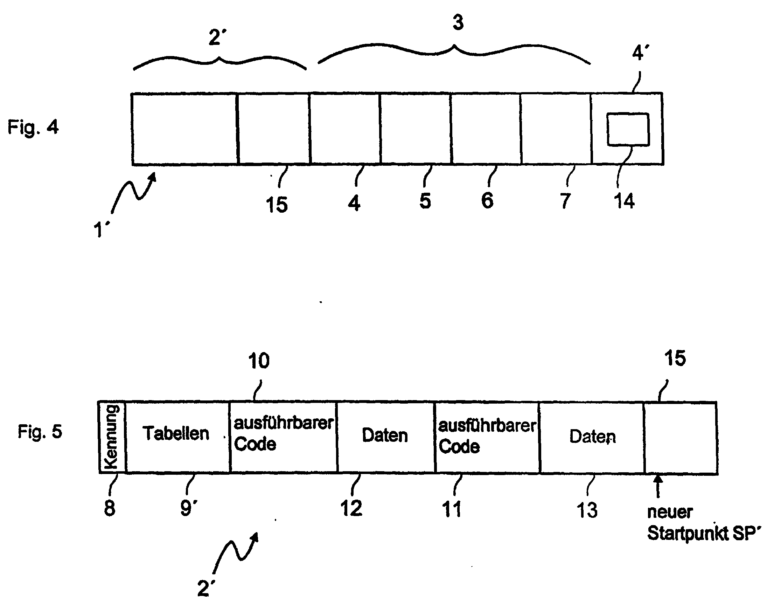

Schließlich wird das Installationsprogramm 2 auch noch so verändert (Schritt S4), daß aufgrund der Ausführung des geänderten Installationsprogrammes 2' der Hilfscode 15 gestartet wird. Der Aufbau des so geänderten Softwarepaket 1' ist in Fig. 4 schematisch dargestellt Die Änderungen des Installationsprogrammes (Schritt S4) läßt sich bspw. so durchführen, daß der in den Tabellen 9 angegebene Startpunkt SP nicht mehr auf ausführbaren Code des installationsprogrammes 2 zeigt, sondem auf den Hilfscode 15 (bzw. ausführbaren Code davon), wie in Fig. 5 dargestellt ist (neuer Startpunkt SP').

Bei den Schritten S1 bis S4 müssen weder die erste Komponente 4 noch die anderen Komponenten 5, 6, 7 teilweise oder vollständig aus dem Programmarchiv entfernt werden, so daß die Schritte S1 bis S4 ohne Kenntnis der genauen Struktur des Programmarchivs durchführbar sind. Zur Durchführung der Schritte S1 bis S4 ist eine Änderung des Programmarchivs 3 somit nicht notwendig.

Danach können optional (Schritt S5) noch das Programmarchiv 3 und die geschützte erste Komponente 4'verschlüsselt werden, und zum Softwarepaket kann ein Entschlüsselungsmodul (nicht gezeigt) hinzugefügt werden. Das Entschlüsselungsmodul wird bevorzugt zum Installationsprogramm 2' hinzugefügt, das in diesem Fall nochmals in einer solchen Art verändert wird, daß bei seiner Ausführung zuerst die Entschlüsselung des verschlüsselten Programmarchivs und der verschlüsselten erweiterten ersten Komponente 4' erfolgt, wenn eine benötigte Laufberechtigung vorliegt. Danach wird dann der Hilfscode 15 gestartet. Durch die Verschlüsselung wird vorteilhaft erreicht, daß die zu installierende Anwendung, die im Programmarchiv abgelegt ist und auch nach Durchführung des erfindungsgemäßen Verfahrens noch die erste (nicht geschützte) Komponente enthält, nicht einfach als nicht geschützte Anwendung (ohne Installation der geschützten ersten Komponente 4') z. B. mit einem anderen Installationsprogramm installiert werden kann. Des weiteren wird auch eine nicht gewünschte Änderung der geschützten ersten Komponente 4' aufgrund der Verschlüsselung verhindert

Optional kann noch ein weiterer Schritt S6 ausgeführt werden, mit dem spezielle Lizenzen (z.B. Zertifikate, die das Vorliegen der Laufberechtigung anzeigen) und/oder ein Lizenzmanager, der als Vermittlungsglied zwischen der geschützten Anwendung und der Lizenz fungiert, wiederum außerhalb des Programmarchivs 3 zum Softwarepakt 1 hinzugefügt werden. In diesem Fall weist der Hilfscode eine Funktion auf, mit der die Lizenzen und/oder der Lizenzmanager auf dem Zielsystem installiert werden.

Der Hilfscode 15, der im Schritt S3 zum Softwarepaket hinzugefügt wird, wird aufgrund der Änderungen des Installationsprogrammes in Schritt S4 bei Start des Installationsprogrammes ausgeführt und sorgt dafür, daß nach Abschluß des Installationvorganges die geschützte Anwendung (die Anwendung mit der geschützten ersten Komponente) auf dem Zielsystem installiert ist. Dazu kann der Hilfscode 15 nach Installation der ersten (ungeschützten) Komponente 4 durch das Installationsprogramm 2 die installierte erste Komponente 4 auf dem Zielsystem löschen und statt dessen die geschützte erste Komponente 4' auf dem Zielsystem installieren. Dies läßt sich technisch dadurch verwirklichen, daß der Hilfscode 15 den Betriebssystem-Aufruf des Installationsprogrammes 2', der die Beendigung des Installationsprogrammes 2' anzeigt, überwacht und bei dessen Auftreten die Kontrolle übernimmt und die Ersetzung der installierten ersten Komponente 4 durch die geschützte erste Komponente 4' durchführt. Alternativ kann auch im Installationsprogramm 2' eine Verzweigung vor diesem Betriebssystemaufruf zu dem Hilfscode 15 im Schritt S4 eingefügt werden.

Des weiteren kann der Hilfscode 15 auch so ausgelegt sein, daß die Installation der ersten Komponente 4 durch das Installationsprogramm 2 verhindert und statt dessen die geschützte erste Komponente 4' installiert wird. Dies läßt sich technisch z. B. dadurch realisieren, daß der Hilfscode 15 einen Filter installiert, der die Kommunikation zwischen dem Installationsprogramm 2' und dem Zielsystem überwacht und so feststellt, wann die Installation der ersten Komponente 4 beginnt. Zu diesem Zeitpunkt wird dann die Kontrolle an den Hilfscode 15 übergeben, der statt dessen die geschützte erste Komponente 4' installiert und das Installationsprogramm 2' entweder nach der Installationsroutine für die erste Komponente 4 fortsetzt oder dem Installationsprogramm 2' solche Rückmeldungen gibt, daß für das Installationsprogramm 2' die Installation der ersten Komponente 4 erfolgreich durchgeführt wurde, so daß das Installationsprogramm 2' den Installationsvorgang normal fortsetzt.

Durch das erfindungsgemäße Verfahren zum Erweitern der zu installierenden Anwendung um eine gewünschte Funktion (wie z.B. Schutz gegen unberechtigte Nutzung) wird somit sicher gestellt, daß nach Abschluß des Installationsvorganges nur die erweiterte Anwendung auf dem Zielsystem installiert ist.

Das in Fig. 4 gezeigte geänderte Softwarepaket 1' kann in einer oder auch in verschiedenen Dateien abgelegt sein. Bei dem geänderten Softwarepaket 1' können, falls nötig, noch Schritte durchgeführt werden, mit denen Änderungen bewirkt werden, die zum elektronischen Vertrieb des geänderten Softwarepakets notwendig sind.

## Patentansprüche

1. Verfahren zum Erweitern einer mittels eines Installationsprogramms (2) zu installierenden Anwendung um eine Funktion, wobei die zu installierende Anwendung eine mittels des Installationsprogramms (2) zu installierende Komponente (4, 5, 6, 7) aufweist, die in einem Programmarchiv (3) abgelegt ist, und das installationsprogramm (2) zusammen mit dem Programmarchiv (3) ein Softwarepaket (1) bildet, wobei das Verfahren folgende Schritte umfaßt:
- Hinzufügen einer um die Funktion erweiterten Version (4') der zu installierenden Komponente (4) und von Hilfscode (15) zum Softwarepaket (1), ohne die zu installierende Komponente (4) aus dem Programmarchiv (3) zu entfemen, und
- Ändern des Installationsprogramms (2) derart, daß aufgrund seiner Ausführung der Hilfscode (15) ausgeführt wird, der bewirkt, daß statt der Komponente (4) die erweiterte Komponente (4') installiert wird.

2. Verfahren nach Anspruch 1, bei dem der Hilfscode (15) bei seiner Ausführung bewirkt, daß bei Auftreten eines durch die Ausführung des Installationsprogramms bedingten Ereignisses die erweiterte Komponente (4') installiert wird.

3. Verfahren nach Anspruch 1 oder 2, bei dem der Hilfscode (15) bei seiner Ausführung bewirkt, daß die bereits Installierte Komponente (4) durch die erweiterte Komponente (4') ersetzt wird, wobei dies bevorzugt nach Abschluß der Installation von allen im Programmarchiv enthaltenen Komponenten (4,5,6,7) durchgeführt wird.

4. Verfahren nach Anspruch 1 oder 2, bei dem der Hilfscode (15) bei seiner Ausführung bewirkt, daß die Installation der Komponente (4) verhindert und statt dessen die erweiterte Komponente (4) installiert wird.

5. Verfahren nach Anspruch 4, bei dem das Installationsprogramm (2) durch den Hilfscode (15) so verändert wird, daß bei Ausführung des Installationsprogramms die Programmroutine zur Installation der Komponente (4) übersprungen wird, oder bei dem der Hilfscode (15) bei seiner Ausführung den Installationsvorgang überwacht und bei Beginn der Installation der Komponente (4) derart in den Installationsvorgang eingreift, daß die Installation der Komponente (4) verhindert wird.

6. Verfahren nach einem der Ansprüche 1 bis 5, wobei ein Schritt der Erzeugung der erweiterten Komponente (4') vor dem Schritt des Hinzufügens vorgesehen ist.

7. Verfahren nach Anspruch 6, bei dem das Programmarchiv mehrere zu installierende Komponenten (4, 5, 6, 7) enthält und der Schritt der Erzeugung der erweiterten Komponente (4') folgende Schritte umfaßt Installieren der zu erweiternden Anwendung, Auswählen einer der installierten Komponenten als zu erweiternde Komponente (4) und Erweitern der ausgewählten Komponente (4).

8. Verfahren nach einem der Ansprüche 1 bis 7, bei dem das Installationsprogramm (2) derart geändert wird, daß eine im Installationsprogramm (2) enthaltene Information, die den Startpunkt des Installationsprogramms (2) vorgibt, so verändert wird, daß nun der Startpunkt im Hilfscode (15) liegt.

9. Verfahren nach einem der Ansprüche 1 bis 8, bei dem die zu installierende Anwendung um die Funktion des Schutzes gegen unberechtigte Nutzung erweitert wird, wobei bevorzugt zur ausgewählten bzw. erweiterten Komponente (4') ein Schutzmodul (14) hinzugefügt wird, das die Ausführung der erweiterten Komponente (4') nur bei Vorliegen einer Laufberechtigung zuläßt.

10. Verfahren nach einem der Ansprüche 1 bis 9, bei dem das Programmarchiv (3) und bevorzugt die erweiterte Komponente (4') verschlüsselt werden und zum Softwarepaket ein Entschlüsselungsmodul zum Entschlüsseln des Programmarchivs (3) und gegebenenfalls der erweiterten Komponente (4') vor der Installation der zu installierenden Anwendung hinzugefügt wird.

11. Computerprogrammprodukt, das Softwarecode umfaßt, mit dem die Schritte gemäß einem der Ansprüche 1 bis 10 ausgeführt werden, wenn das Produkt auf einem Computer läuft, wobei bevorzugt das Computerprogrammprodukt auf einem Datenträger gespeichert ist

## Claims

1. A method for extending an application, which is to be installed using an installation program (2), by a function, wherein the application to be installed comprises a component (4, 5, 6, 7) to be installed by the installation program (2), said component being stored in a program archive (3), and wherein said installation program (2) forms a software package (1) together with said program archive (3), the method comprising the steps of:
- adding to said software package (1) a version (4') of the component (4) to be installed, said version being extended by said function, and auxiliary code (15) without removing the component (4) to be installed from the program archive (3), and
- modifying the installation program (2) such that its execution leads to the execution of the auxiliary code (15), said auxiliary code causing the extended component (4') to be installed instead of said component (4).

2. A method according to claim 1, wherein the auxiliary code (15), when being executed, causes the extended component (4') to be installed upon occurence of an event resulting from the execution of the installation program.

3. A method according to claim 1 or 2, wherein the auxiliary code (15), when being executed, causes the already installed component (4) to be replaced by the extended component (4), this being preferably carried out upon completion of the installation of all components (4,5,6,7) contained in the program archive.

4. A method according to claim 1 or 2, wherein the auxiliary code (15), when being executed, prevents the installation of component (4) and, instead, causes the extended component (4) to be installed.

5. A method according to claim 4, wherein the installation program (2) is modified by the auxiliary code (15) such that, during execution of the installation program, the program routine for installation of component (4) is skipped, or wherein the auxiliary code (15), while being executed, monitors the installation operation and interferes with the installation operation once installation of component (4) begins so as to prevent the component (4) from being installed.

6. A method according to one of claims 1 to 5, comprising the step of generating the extended component (4') before the adding step.

7. A method according to claim 6, wherein the program archive comprises a plurality of components (4, 5, 6, 7) to be installed and the step of generating the extended component (4') comprises the steps of: installing the application to be extended, selecting one of the installed components as the component (4) to be extended and extending said selected component (4).

8. A method according to one of claims 1 to 7, wherein the installation program (2) is modified such that information on the starting point of the installation program (2) contained in said installation program (2) is modified such that the starting point now lies in auxiliary code (15).

9. A method according to one of claims 1 to 8, wherein the application to be installed is extended by a function for protection against unauthorized use, and, preferably, a protection module (14) is added to the selected or extended component (4'), which module allows the extended component (4') to be executed only in the presence of a run authorization.

10. A method according to one of claims 1 to 9, wherein the program archive (3) and, preferably, the extended component (4') are encrypted and a decrypting module for decrypting the program archive (3) and optionally the extended component (4') before installation of the application to be installed is added to the software package.

11. A computer software product comprising software code for carrying out the steps according to one of claims 1 to 10, when the product is running on a computer, said computer software product preferably being stored on a data storage medium.

## Revendications

1. Procédé pour ajouter une fonction à une application à installer au moyen d'un programme d'installation (2), l'application à installer comportant une composante (4, 5, 6, 7) à installer au moyen du programme d'installation (2), laquelle est enregistrée dans une archive de programmes (3), et le programme d'installation (2) forme avec l'archive de programmes (3) un ensemble logiciel (1), le procédé comprenant les étapes suivantes :
- ajout d'une version (4'), étendue de la fonction de la composante (4) à installer et du code auxiliaire (15), à l'ensemble logiciel (1), sans éliminer la composante (4) à installer de l'archive de programmes (3), et
- modification du programme d'installation (2) de manière que du fait de son exécution, le code auxiliaire (15) soit exécuté, ce qui fait que la composante (4') étendue est installée à la place de la composante (4).

2. Procédé selon la revendication 1, dans lequel le code auxiliaire (15) fait que, pendant son exécution et lorsque se produit un événement conditionné par l'exécution du programme d'installation, la composante (4') étendue est installée.

3. Procédé selon la revendication 1 ou 2, dans lequel le code auxiliaire (15) fait que, pendant son exécution, la composante (4) déjà installée est remplacée par la composante (4') étendue, ceci étant exécuté de préférence à l'achèvement de l'installation de toutes les composantes (4, 5, 6, 7) contenues dans l'archive de programmes.

4. Procédé selon la revendication 1 ou 2 dans lequel le code auxiliaire (15) fait que, pendant son exécution, l'installation de la composante (4) est empêchée et à la place de celle-ci est installée la composante (4) étendue.

5. Procédé selon la revendication 4, dans lequel le programme d'installation (2) est modifié par le code auxiliaire (15) de manière que, pendant l'exécution du programme d'installation, la routine de programme pour l'installation de la composante (4) est sautée, ou dans lequel le code auxiliaire surveille, pendant son exécution, la procédure d'installation, et intervient dans la procédure d'installation, au début de l'installation de la composante (4), de manière que l'installation de la composante (4) soit empêchée.

6. Procédé selon l'une des revendications 1 à 5 dans lequel une étape de la production de la composante étendue (4') est prévue avant l'étape de l'ajout.

7. Procédé selon la revendication 6, dans lequel l'archive de programmes contient plusieurs composantes (4, 5, 6, 7) à installer, et l'étape de la production de la composante étendue (4') comprend les étapes suivantes : installation de l'application étendue, sélection de l'une des composantes installées comme composante (4) à étendre et extension de la composante (4) sélectionnée.

8. Procédé selon l'une des revendications 1 à 7, dans lequel le programme d'installation (2) est modifié de manière qu'une information, contenue dans le programme d'installation (2), qui prédéfinit le point de lancement du programme d'installation (2), est modifiée de manière que le point de lancement se trouve maintenant dans le code auxiliaire (15).

9. Procédé selon l'une des revendications 1 à 8, dans lequel l'application à installer est étendue de la fonction de protection contre une utilisation non autorisée, à la composante (4') sélectionnée ou étendue étant ajouté de préférence un module de protection (14) qui autorise l'exécution de la composante étendue (4') uniquement en présence d'une autorisation d'exécution.

10. Procédé selon l'une des revendications 1 à 9, dans lequel l'archive de programmes (3) et de préférence la composante (4') étendue sont codées et à l'ensemble logiciel est ajouté un module de décodage pour décoder l'archive de programmes (3) et éventuellement la composante étendue (4'), avant l'installation de l'application à installer.

11. Produit de programme d'ordinateur qui comprend un code logiciel au moyen duquel sont exécutées les étapes selon l'une des revendications 1 à 10, lorsque le produit tourne sur un ordinateur, le produit de programme d'ordinateur étant mémorisé de préférence sur un support de données.
